# EUROPEAN PATENT SPECIFICATION

(11) **EP 4 296 854 B1**
(45) Date of publication and mention of the grant of the patent: **02.12.2026**
(21) Application number: 22755540.6
(22) Date of filing: 16.02.2022
(51) Int. Cl.: G06F 9/455, G06F 9/50

(54) **APPLICATION MANAGEMENT METHOD AND APPARATUS**
ANWENDUNGSVERWALTUNGSVERFAHREN UND -VORRICHTUNG
PROCÉDÉ ET APPAREIL DE GESTION D'APPLICATION

(30) Priority: 22.02.2021 CN 202110197564
(43) Date of publication of application: 27.12.2023
(73) Proprietor: ALIBABA GROUP HOLDING LIMITED, George Town, Grand Cayman (KY)
(72) Inventor: SHI, Mingwei, Hangzhou, Zhejiang 311121 (CN); DING, Yu, Hangzhou, Zhejiang 311121 (CN); WANG, Xiaorui, Hangzhou, Zhejiang 311121 (CN); ZHOU, Xinyu, Hangzhou, Zhejiang 311121 (CN); LI, Zhanhui, Hangzhou, Zhejiang 311121 (CN); ZHAN, Zhouxiang, Hangzhou, Zhejiang 311121 (CN)
(74) Representative: Finnegan Europe LLP
(86) International application number: PCT/CN2022/076414
(87) International publication number: WO 2022/174767

(56) References cited:
- CN-A- 113 296 883
- CN-A- 113 296 923
- US-A1- 2008 243 968
- US-A1- 2018 254 998
- US-A1- 2020 081 745
- US-A1- 2020 081 745
- ISABELLE PUAUT: "A distributed garbage collector for active objects", ACM SIGPLAN NOTICES, ASSOCIATION FOR COMPUTING MACHINERY, US, vol. 29, no. 10, 1 October 1994 (1994-10-01), pages 113 - 128, XP058128099
- MOHAN ANUP ET AL: "Agile Cold Starts for Scalable Serverless", 8 July 2019 (2019-07-08), XP093055227, Retrieved from the Internet <URL:https://www.usenix.org/system/files/hotcloud19-paper-mohan.pdf> [retrieved on 20230617]
- STENBOM OLIVER: "Refunction: Eliminating Serverless Cold Starts Through Container Reuse", 1 June 2019 (2019-06-01), XP055797986, Retrieved from the Internet <URL:https://www.imperial.ac.uk/media/imperial-college/faculty-of-engineering/computing/public/1819-ug-projects/StenbomO-Refunction-Eliminating-Serverless-Cold-Starts-Through-Container-Reuse.pdf> [retrieved on 20210422]

## Description

### CROSS-REFERENCE TO RELATED APPLICATIONS

The disclosure claims the benefits of priority to Chinese Application No. 202110197564.9, filed February 22, 2021.

### TECHNICAL FIELD

The present disclosure relates to the field of serverless computing, in particular to an application management method and apparatus.

### BACKGROUND

Serverless computing, also called function-as-a-service, is a model for cloud computing. On the basis of platform-as-a-service, serverless computing provides a micro architecture, with which it is not necessary for terminal clients to deploy, configure or manage server services, and server services required for code running are all provided by a cloud platform. In the current cloud computing distributed environment, serverless computing is popular as it can make application developers focus on products without concerning about running states of applications on local or cloud servers.

In order to deal with the change of the service request flow, it is required to increase application running examples from one example to a plurality of examples, or decrease a plurality of copies to fewer copies, the processes of increase and decrease may be referred to as expansion and contraction respectively, and the capability of expansion and contraction is collectively called elasticity.

Under a serverless computing elastic scenario, cold-starting of applications consumes long time, which cannot meet the requirement for rapid expansion. In order to provide the higher quality of service for users, typically, a certain number of examples (e.g., a Java service example) need to be started in advance to be in a standby state, so as to deal with the requirement for rapid expansion under the flow change. These examples in the standby state do not accept an external request connection at ordinary times, or participate in external services, but occupy a large amount of system resources, which leads to serious system resource waste.

To this end, a modified application management scheme is required.

Patent application US 2020/081745 A1 discloses the optimization of cold start of serverless functions within software containers for use in functions as a service.

The document "A distributed garbage collector for active objects" (by ISABELLE PUAUT) discloses algorithms that perform garbage collection in distributed systems of active objects) through a set of local garbage collectors loosely coupled to a logically centralized global garbage collector that maintains a global snapshot of system state.

### SUMMARY OF THE DISCLOSURE

A technical problem to be solved by the present disclosure is to provide a modified application management scheme for serverless computing. In consideration that examples which are started in advance usually have the similar running context, in the present disclosure, through rearrangement and merging for application instances, especially for an example heap internal memory area, a plurality of similar running examples can achieve internal memory sharing to the maximum extent, occupation of examples in a standby state on system resources is reduced, and the average utilization rate of the resources is increased. Therefore, under the same system resources, more running examples may be started to be in a standby state or running examples of other applications may be started, to deal with a rapid elastic expansion scenario.

According to a first aspect of the present disclosure, an application management method is provided, according to claim 1.

According to another aspect of the present disclosure, an application management apparatus is provided, according to claim 12.

According to another aspect of the present disclosure, a computing device is provided, according to claim 15.

Therefore, in the present disclosure, by designing a whole set of millisecond-level application elastic scheme based on multi-process internal memory sharing, and by utilizing the JVM (Java Virtual Machine) CDS (Class Data Sharing) technology, an internal memory heap alignment algorithm and thread stack recovery, with the aid of the KSM (Kernel Shared Memory) internal memory merging technology, a plurality of surviving examples of the same application can occupy extremely few system resources, and millisecond-level elastic expansion of the application instances can be achieved with a low resource cost.

### BRIEF DESCRIPTION OF THE DRAWINGS

By more detailed description of exemplary implementations of the present disclosure with reference to the accompanying drawings, the above and other objectives, features, and advantages of the present disclosure will become more apparent, where identical reference numerals generally represent identical components in the exemplary implementations of the present disclosure.
**FIG. 1** shows a schematic flowchart of an application management method for serverless computing according to an embodiment of the present disclosure.
**FIG. 2** shows a schematic diagram of a JVM internal memory after cold-starting of a plurality of application instances.
**FIG. 3** shows a schematic diagram of a JVM internal memory after an FGC operation.
**FIG. 4** shows a schematic diagram of an internal memory shared across JVMs after rearrangement of a meta area.
**FIG. 5** shows execution steps of a heap alignment operation according to the present disclosure.
**FIG. 6** shows an instance of frame recovery of the present disclosure.
**FIG. 7** shows an instance of lowering internal memory consumption of an application instance according to the present disclosure.
**FIG. 8** shows an instance of performing internal memory merging based on application groups.
**FIG. 9** shows an instance of direct state conversion of different types of application instances of the present disclosure.
**FIG. 10** shows a schematic diagram of composition of an application management apparatus according to an embodiment of the present disclosure.
**FIG. 11** shows a schematic structural diagram of a computing device that may be used for implementing the above application management and/or internal memory sorting methods according to an embodiment of the present disclosure.

### DETAILED DESCRIPTION

Preferred implementations of the present disclosure will be described in more detail below with reference to the accompanying drawings. Although the preferred implementations of the present disclosure are shown in the accompanying drawings, it is to be understood that the present disclosure can be implemented in various forms and shall not be limited to the implementations set forth herein. Rather, these implementations are provided so that the present disclosure will be more thorough and complete, and will be able to fully convey the scope of the present disclosure to those skilled in the art.

As stated above, serverless computing is popular as it can make application developers focus on products without concerning about running states of applications on local or cloud servers. Under a serverless computing elastic scenario, cold-starting of applications consumes long time, which cannot meet the requirement for rapid expansion. In order to provide the higher quality of service for users, typically, a certain number of examples (e.g., a Java service example) need to be started in advance to be in a standby state, so as to deal with the requirement for rapid expansion under the flow change. These examples in the standby state do not accept an external request connection at ordinary times, or participate in providing services, but occupy a large amount of system resources, which leads to serious system resource waste.

At present, under a part of systems or environments, in order to achieve rapid starting and maximum-extent resource sharing of Java examples, a bottom layer typically creates a new process with the Fork or Clone technology. For instance, creation of other running examples is achieved by Fork of a main process of a Zygote framework, which is commonly used in the Android system, and finally the purposes of rapid starting and resource sharing of the running examples are achieved.

However, for traditional Java applications, running examples that are newly created by utilizing Fork/Clone may have a state problem, especially for some Java background service programs, a plurality of examples may have the same IP or UUID (Universally Unique Identifier) or other information, which is unacceptable in a real production environment. Meanwhile, in such method, after a running internal memory of a program is contaminated, it cannot return to a previous shared state. In addition, to utilize Fork/Clone, it is required to complete shared parts before calling of Fork/Clone as far as possible, and then the newly Forked running example can share resources with a parent process to the maximum extent. For traditional Java applications, on the one hand, the proportion of this part of resources is small, on the other hand, logics and code processes of programs need to be reconstructed to put some common logics ahead, and for existing applications, the difficulty of code reconstruction and transformation is significant.

To this end, in consideration that examples which are started in advance usually have the similar running context (e.g., JVM running context), in the present disclosure, as for application instances, especially for sorting and rearrangement for an example heap internal memory area (e.g., Java Heap), a plurality of similar running examples can achieve internal memory sharing to the maximum extent, occupation of examples in a standby state on system resources is reduced, and the average utilization rate of the resources is increased. Meanwhile, it also means that, under the same system resources, more running examples may be started to be in a standby state or running examples of other applications may be started, to deal with a rapid elastic expansion scenario.

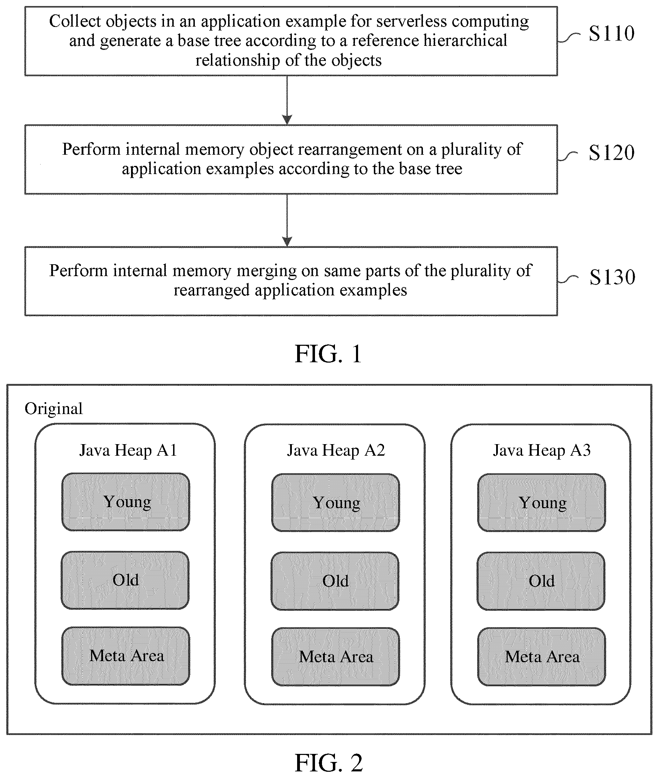

**FIG. 1** shows a schematic flowchart of an application management method for serverless computing according to an embodiment of the present disclosure. The above management method is especially suitable for being implemented as a millisecond-level application elastic method based on multi-process internal memory sharing. Here, "elastic" refers to expansion and contraction of applications, where expansion may refer to a process that the applications are changed from a low power consumption state to a state of receiving full flow, and contraction may refer to a process that the applications are changed from receiving flow to a standby running example. Elasticity may be divided into vertical elasticity and horizontal elasticity, vertical elasticity means that expansion and contraction behaviors occur on the same host, and horizontal elasticity means expansion and contraction behaviors across hosts. In order to achieve elastic and rapid expansion and contraction of serverless computing and shorten service response time, in some cases, running examples of a plurality of applications need to be prepared in advance to be in a standby state. The application management method of the present disclosure especially focuses on the serverless computing elastic scenario.

In step S110, objects in an application instance are collected and a base tree is generated according to a reference hierarchical relationship of the objects. In step S120, internal memory object rearrangement is performed on a plurality of application instances according to the base tree. That is, data (the data may represent the objects in the application instances) in internal memories corresponding to the application instances are rearranged according to the order and hierarchical structure of the objects in the base tree. In step S130, internal memory merging is performed on same parts of the plurality of rearranged application instances to enable the plurality of application instances to enter into a low power consumption state.

Due to the similarity of the plurality of application instances (e.g., a plurality of application instances started for the same application), although the plurality of application instances may have different object orders for many reasons in the starting process, the contained objects (e.g., root objects of a top layer) and a reference relationship of the objects are highly similar or identical. To this end, in step S120, the objects (and the reference relationship thereof) in the application instances may be rearranged based on the same base tree, thereby making internal memory physical pages highly identical. Then, same data parts of the application instances can be merged in step S130, for instance, only one copy is reserved, and other application instances can directly copy content of this reserved copy during expansion.

Therefore, a contraction state of serverless computing is achieved through hierarchical sorting and internal memory merging for the objects in the plurality of similar application instances.

In a serverless computing scenario, the application instances typically may be implemented as JVM (Java virtual machine) application instances. Each example may be cold-started initially and correspond to one process. Here, "cold-starting" refers to an application starting process that process running resources are allocated to a process of one application from an initial state, including links such as loading program codes by a computer, starting the process, experiencing code loading completely and initializing the program.

"The plurality of application instances" include one application instance in which the objects are collected and the base tree is generated in step S110 and a plurality of other application instances (i.e., "similar application instances") similar to the application instance. Since all these application instances include similar objects and object reference relationships, internal memory rearrangement in step S120 and internal memory merging in step S130 may be performed based on the object order and reference hierarchical relationship in the base tree.

The "similar application instances" especially may be application instances for the same application, such as 100 application instances (processes) of the same shopping application A. In one embodiment, the similar application instances may be similar JVM running examples. For the same JAVA application, a plurality of running examples having the same configuration and same runtime parameters or a plurality of running examples in which only few running parameters are different (e.g., different in IP, port and other information of applications) may be generated after multiple times of starting. Herein, a plurality of such JVM examples may be referred to as a plurality of similar JVM running examples. These examples run in an independent process context and have an independent virtual address space. Since these examples are different in starting time and different in runtime environment and system resource of a system in a starting process, and due to uncertainty of asynchronous operations during running of a code logic (such as network connections and remote process calling) and uncertainty of runtime states such as the opportunity of JVM GC (garbage collection) in a running process of a JAVA program, the context is not consistent when the plurality of JVM running examples run, however, codes that they run, runtime parameters and the code running logic are almost the same, these examples are called the similar JVM running examples herein, and by utilizing the similarity of these running examples, a contraction state in which extremely few internal memory resources are occupied is achieved, and the contraction state may be expanded at a millisecond level to an online state in which service users make requests with full flow.

Massive objects exist in the started application instances, considering that the similar application instances are almost the same in run code, runtime parameter and code running logic, in the present disclosure, by collecting the objects in the application instance and generating the base tree according to the hierarchical relationship, internal memory sorting may be performed on all the similar application instances based on the base tree, and internal memory merging may be performed accordingly, so that these application instances occupy extremely few internal memory resources in the standby state (i.e., low power consumption state), and can be rapidly and elastically expanded to the online state.

The application instances need a starting process. To this end, before step S110, the plurality of application instances may be cold-started. For instance, the plurality of running examples are started for the same application. **FIG. 2** shows a schematic diagram of a JVM internal memory after cold-starting of the plurality of application instances.

As shown, three running examples A1, A2 and A3 are cold-started for the same application. In the original state as shown, each running example includes one JAVA Heap. Each heap includes a Young Area, an Old Area and a Meta Area inside.

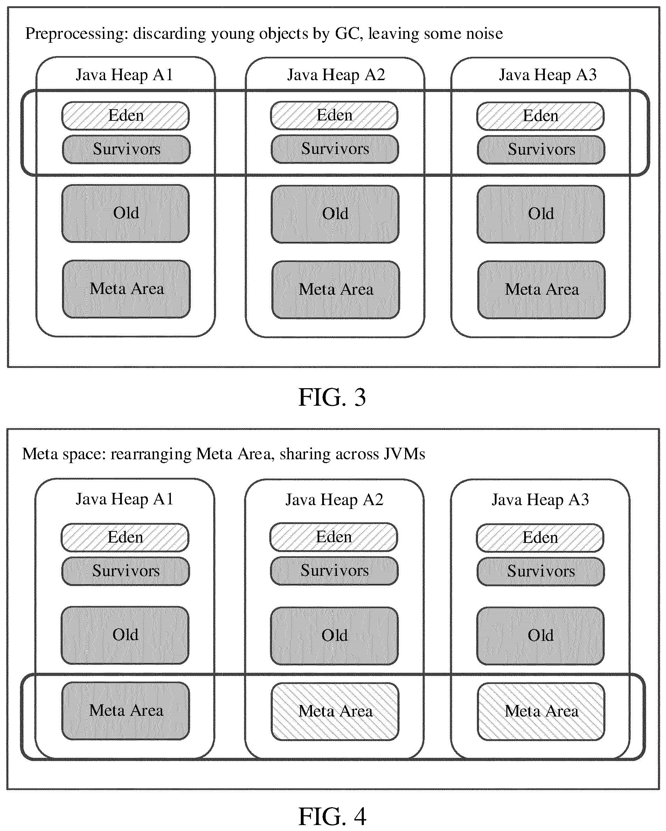

After cold-starting, an in-heap garbage recovery operation may be performed on the plurality of application instances and temporary objects may be released. GC processing, especially full GC (FGC) processing for the whole heap, may be performed on each JAVA Heap. **FIG. 3** shows a schematic diagram of a JVM internal memory after an FGC operation. As shown, after FGC preprocessing, most temporary objects in an Eden area may be recovered. At this moment, the Young Area further includes survivors (in some cases, the survivors may be further segmented into an area S0 and an area S1).

A class data sharing operation may be performed for the meta areas in **FIG. 2** and **FIG. 3** to achieve internal memory sharing across the examples. For instance, for a JVM example in a hot standby state, an App class data sharing (CDS) technology may be enabled during starting, so as to perform internal memory sharing on the Meta Area of the JVM example.

Rearrangement may be performed on the Meta Area according to classes, and sharing across JVMs is achieved after rearrangement. Therefore, the Meta Area is changed in this stage, so that a Kclass field in an object header of the Old Area needs to be modified to achieve the internal memory sharing operation for the Meta Area by utilizing the CDS technology. **FIG. 4** shows a schematic diagram of an internal memory shared across JVMs after rearrangement of the Meta Area.

It is to be understood by those skilled in the art that, although it is not shown in **FIG**. **2** to **FIG. 4**, there may also be out-of-heap areas in the JVM internal memory in addition to the in-heap areas, such as a thread area including a register, a JVM stack and a local method stack.

Preferably, after performing FGC preprocessing and after optionally performing rearrangement and sharing on the Meta Area, base tree construction and internal memory object rearrangement and merging operations as in steps S110 to S130 are performed. The base tree construction and internal memory object rearrangement and merging operations in steps S110 to S130 are especially suitable for being performed in the survivors area and the Old Area.

Specifically, after the Young Area and the Meta Area are processed, the Survive area and the Old Area (the areas of this part are also a part in which the internal memory proportion in the JVM Heap is the maximum) of the JVM example may be processed. One JVM example is selected from a group of similar JVM examples, as for this part of internal memory, it is sorted using a creative heap alignment operation (corresponding to steps S110 and S120) of the present disclosure, and then meta information that is sorted is exported (for instance, in a form of the base tree) to be used as reference information for sorting same internal memory areas of other similar JVM internal memory examples.

The heap alignment operation of the present disclosure may be regarded as a GC-enhanced algorithm, heap objects may be sorted transparently in the GC process, and internal memory data of heap areas of the plurality of similar JVM examples are made consistent as much as possible. The main purpose of the heap alignment operation is to shield or shrink a range of internal memory inconsistency of the plurality of JVMs by sorting the objects in the heaps. Of course, the premise of the above operation of the present disclosure is that the internal memory data in different JVM processes of the same application are basically consistent, and if the difference between two heaps is large, the effect of the alignment operation will deteriorate.

Since the heap alignment operation is preferably performed after FGC, most temporary objects in the Eden Area have been recovered first by FGC. To this end, collecting the objects in the application instances and generating the base tree according to the reference hierarchical relationship of the objects includes: collecting surviving objects in a heap after releasing the temporary objects, and generating the base tree according to the hierarchical relationship. Top-layer objects surviving in the heap may be collected as a first layer of the base tree; objects that are directly referenced by objects of the first layer are collected as a second layer of the base tree; and the operation is repeated until a final layer. Here, the top-layer objects are typically defined as root objects in the JVM, and are generally system objects or objects in a Permanent Generation.

Specifically, in the execution process of the heap alignment operation, all surviving top-layer objects in the JVM Heap may be collected first according to a breadth first search (BFS) algorithm, including objects directly referenced by in-heap GC roots or out-of-heap GC roots. The objects collected in the second layer are objects directly referenced by the objects of the first layer, the objects collected in the third layer are objects directly referenced by the second layer, and so on. Finally, objects in the Survive Area and the Old Area are collected to form storage objects that are in accordance with the reference hierarchy. After the surviving objects are collected, addresses of all the objects may be gathered in the tree and a hierarchical relationship is obtained. However, contents of the objects are still scattered in the whole heap. Then, the objects in the heap will be rearranged by running a heap sorting algorithm, and at the same time, hierarchical data used for guiding rearrangement are exported for performing internal memory sorting on other similar JVM examples according to this information.

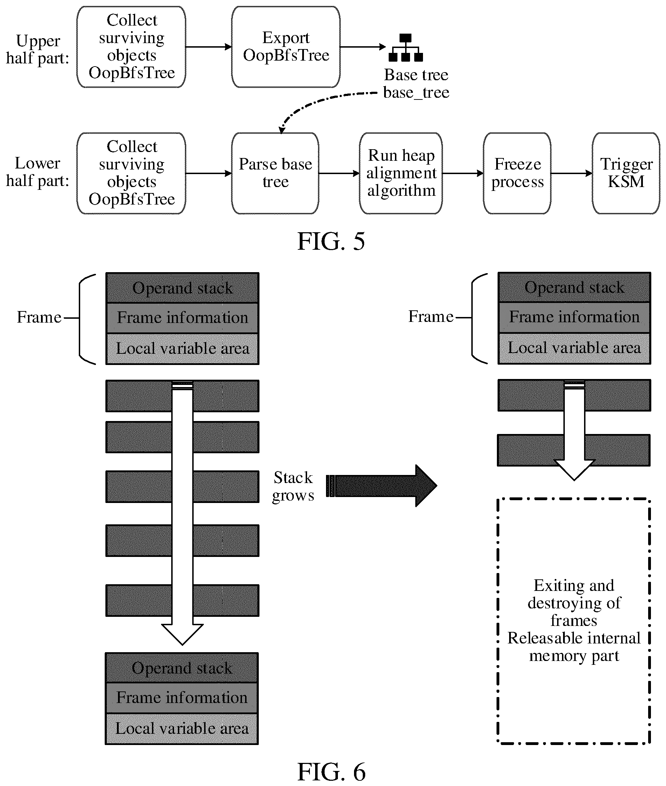

**FIG. 5** shows execution steps of a heap alignment operation according to the present disclosure. As shown, an upper half part is mainly used for collecting surviving object layout information of a reference process, producing a BFS tree and then exporting this data structure (OopBfsTree) to obtain the base tree (base_tree). The base tree may, as stated above, include the addresses and the hierarchical relationship of the objects. As an alternative, the base tree may only contain meta data of each class area of each layer, such as the number and sizes of the objects, without containing the addresses of the objects.

In the process of a lower half part, internal memory sorting (i.e., internal memory object rearrangement and merging based on the base tree) may be performed on other processes through the base tree obtained in the upper half part by utilizing a heap alignment operation. As shown, in the lower half part, JVM heap sorting (heap sorting algorithm) may be performed on a plurality of process examples according to the same base tree, the process is frozen after sorting, and then internal memory scanning and merging are performed, for instance, by triggering KSM.

As stated above, in the JVM internal memory, there may also be the out-of-heap areas in addition to the in-heap areas. The out-of-heap areas include a thread area. Each thread may include:

PC Register: also called a program register, used for recording instruction information that is currently executed by each thread. Therefore, which instruction the thread is currently executing and which instruction shall be used next may be obtained.

JVM Stack: also called a virtual machine stack, used for recording a local variable, a method return address and the like in each frame. Every time a method is called in a thread, a frame will be created, and the frame is destroyed when calling of the method is ended.

Native Method Stack: a local (native) method stack, as the name suggests, an internal memory area required when a native local method of an operating system is called.

The three types of areas described above are the same in life cycle and thread. When a thread is created, an internal memory is allocated to corresponding areas, and when the thread is destroyed, the corresponding internal memory is released.

A heap internal memory area used for executing the heap alignment operation of the present disclosure is shared by all threads. The heap internal memory area, also a main station of GC, is used for storing example objects of classes, array examples and the like.

**In** addition to the heap internal memory area, an area shared by all the threads further includes a method area, and the like. The method area is mainly used for storing definitions of class structures and class members, static members and the like. The method area includes a Runtime Constant Pool, which is typically used for storing character strings, values within a range of integer between -128 to 127, and the like. According to the specification, a specific implementation of the method area may be determined based on a JVM implementation. Thus, logically, the method area may also be regarded as a part of a heap area. The heap area and the method area are both created when a virtual machine is started, and are released when the virtual machine exits.

It can be seen from the above that, the JVM internal memory area includes the thread areas and the heap area shared by the thread areas. To this end, (a contraction part of) an application management scheme of the present disclosure may also include performing frame recovery on threads of the similar application instances.

Further internal memory recovery may be carried out on internal thread frames of a JVM in a standby state after the heap area internal memory thereof is processed. For instance, stack information related to internal threads of a standby example of the JVM may be exported by achieving an extended JCMD command, and register information of a thread context is obtained by utilizing Ptrace system call, so that stacks of the threads are recovered. In the serverless computing scenario of the present disclosure, for some large applications in the e-commerce field, up to 400 threads exist in a Java process, and an internal memory space of about 50 M may be saved typically through frame recovery.

**FIG. 6** shows an instance of frame recovery of the present disclosure. As shown, each frame includes an operand stack, frame information and a local variable area. Every time a method is called in a thread, a frame will be created, and the frame is destroyed when calling of the method is ended. To this end, in the cold-starting process, the frame of each thread will grow to a certain extent as shown in the left side of the figure. Through frame recovery, popping of most threads may be achieved after the process is started, thereby achieving exiting and destroying of the frames and releasing the internal memory of the exiting part as shown in the right side of the figure.

Internal memory merging may be performed on the above sorted internal memory. To this end, step S130 may include: performing internal memory labeling on the similar application instances subjected to internal memory object rearrangement in a designated heap area; and enabling kernel internal memory sharing (KSM) to trigger internal memory sharing between the similar application instances.

In computing, kernel same page merging (KSM) (also called kernel internal memory sharing, internal memory merging, internal memory repeated data deletion and page repeated data deletion) is a kernel function, which enables a virtual machine management program system to share internal memory page flows having the same content and/or virtual visitors between a plurality of internal memories. Despite of direct linkage, kernel-based virtual machines (KVM) may use KSM to merge internal memory pages occupied by the virtual machines.

KSM executes internal memory repeated data deletion by scanning physical pages having the same content in a main internal memory, and identifies virtual pages mapped to these physical pages. One page is reserved to be kept unchanged, each repeated page is re-mapped to point to the same physical page, and then redundant physical pages are released for reuse. Two virtual pages are further both labeled as "copy-on-write" (COW), so that a kernel will automatically re-map the virtual pages back to having own separate physical pages after any process begins automatic write into the kernel.

In the present disclosure, after completing the above steps of FGC, heap alignment, frame release and the like, Madvise internal memory labeling may be launched for a designated JVM heap stack area through the extended JCMD command or via a Ptrace manner, and then kernel working threads are merged by enabling KSM, to trigger the designated JVM internal memory area for internal memory merging, so as to achieve internal memory sharing of the plurality of standby JVM examples.

After the plurality of internal memory sorting steps above, one JVM example in the standby state can be cached with extremely low system resources, thereby guaranteeing that more Java examples may be cached with the same resources to be used for rapid expansion.

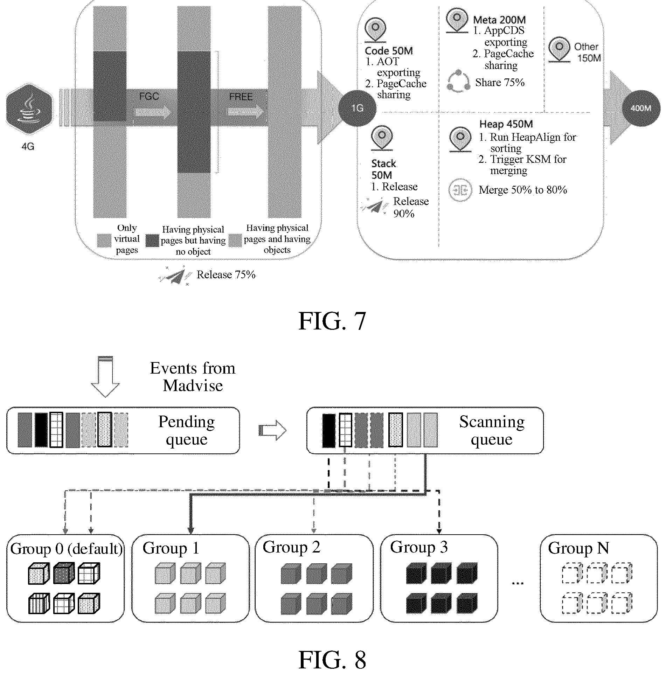

**FIG. 7** shows an instance of lowering internal memory consumption of an application instance according to the present disclosure. As shown in **FIG. 7**, a cold-started Java running example needs to occupy, for instance, an internal memory of 4G. Afterwards, full GC is performed on a JVM internal memory area, a part of area having physical pages and having objects is recovered as an area having physical pages but having no object (typically located in the Java Heap area, especially the Eden area), and internal memory releasing is performed via releasing processing.

After FGC and releasing, the internal memory occupied by the Java running example is changed to 1G. Afterwards, internal memory sharing and/or releasing may be performed for one or more of a Code area, a Meta area, a Heap area and a Stack area. Since these areas are mapped in different areas of the internal memory, the above processing may be performed relatively independently as shown.

For instance, AOT (Ahead of Time) exporting may be performed on the Code area of about 50M, and PageCache sharing is performed; AppCDS (Application Class-Data Sharing) exporting may be performed on the Meta area of about 20M, and PageCache sharing is performed to achieve internal memory void of about 75%; the heap alignment operation as described above may be executed on the Heap area of about 450M to perform object-based sorting, and KSM internal memory merging is performed on the sorted heap area to merge 50% to 80% of the internal memory space; and in addition, internal memory recovery may be performed on the Stack area based on frame recovery, to release about 90% of the internal memory.

Due to the existence of other internal memory spaces of about 150M, one application instance which is compressed as described above may occupy the space of 400M.

To this end, the present disclosure may also be implemented as an internal memory sorting method, including: performing a garbage recovery operation on an application instance used for serverless computing; performing an internal memory object rearrangement operation based on a base tree for the application instance subjected to garbage recovery, where the base tree is generated by collecting objects in the current application instance or similar application instances of the current application instance and according to a hierarchical relationship; and performing an internal memory merging operation on the application instance subjected to internal memory object rearrangement. In addition to the internal memory merging operation of KSM based on the heap alignment operation, the internal memory sorting method may further include the following operations shown in **FIG. 7**: performing meta area internal memory sharing by utilizing class data sharing; releasing a stack area internal memory through frame recovery; and/or exporting codes to perform page cache sharing.

Therefore, contraction of the application instance may be achieved. Afterwards, in an expansion stage, the COW function of KSM as described above may be utilized to re-map the merged virtual pages as own separate physical pages to restore an online state of the application instance, which may also be called a full flow receivable state.

The internal memory sorting and compressing schemes performed for similar application instances of the same application are described in combination with **FIG**. **1** to **FIG. 7** above. Further, the application management method of the present disclosure may also be operated for a plurality of respective similar application instances of different applications. To this end, the method may further include: adding respective application instances of different applications as the similar application instances into one application group; and performing the internal memory merging operation on each group (i.e., a plurality of application instances in each group) of a plurality of application groups.

In practical use, a KSM internal memory merging algorithm grouping in accordance with processes may be introduced, in which internal memory merging is performed by adding a plurality of application instances of the same application into one application group. Specifically, after a Survive area and an Old area of a selected JVM example in each group are sorted, object hierarchy meta data information collected through the above heap alignment algorithm may be exported. Object rearrangement is performed on other JVM running examples in a code state within this group by utilizing exported object hierarchical data, and internal memory merging is performed according to groups.

**FIG. 8** shows an instance of performing internal memory merging based on application groups. As shown, a pending queue includes events from Madvise, these events may be subjected to internal memory labeling via Madvise, and rectangles having the same color/pattern represent events from the same application process.

Afterwards, in a scanning queue, events from different applications may be divided into different application groups. As shown in the lower part of **FIG. 8**, a group 0 may be a default group, including different processes (examples) from a plurality of applications. The groups 1, 2, 3, ... N may each correspond to different processes of one application. In other words, six blocks in the group 1 may represent six similar application instances of an application 1, base tree extraction may be performed for one example (block), the extracted base tree is applied to respective internal memory sorting of each of the six blocks, and then KSM internal memory merging is performed on the six blocks. Similarly, the similar operation as in the group 1 may be executed on the groups 2, 3, ... N.

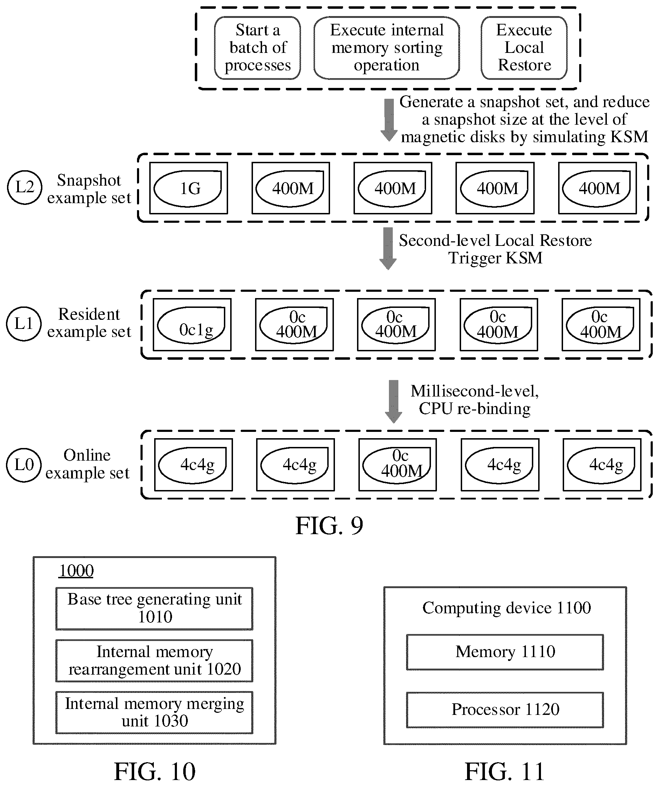

By utilizing the above whole set of internal memory sorting strategies, a plurality of JVM examples survived in cold-starting may share the maximum internal memory as much as possible, and the resource cost of surviving cache examples is lowered. In a preferred embodiment, a set of multi-level cache elastic scheme may be further provided by utilizing a 1:1 snapshot technical solution. **FIG. 9** shows an instance of direct state conversion of different types of application instances of the present disclosure.

Here, L2, L1 and L0 represent different types of states of the same example. L0 is an application instance set which receives flow normally, namely a set of examples that are in an online state and may receive full flow. L1 is a set of examples in a standby state after the internal memory sorting and merging operations of the present disclosure. L2 is an example set in which examples in a standby state are made to snapshots by, for instance, utilizing a Checkpoint/Restore technology.

In addition, resources occupied by the online examples (full flow state) L0 are "4c and 4g", namely 4-core (CPU) and 4g internal memory, and the required extra cost is 0. Resources occupied by the low power consumption examples (low power consumption state) L1 are "0c and 400M", namely 0-core (not occupying a CPU) and 400M internal memory, and the required extra cost is CPU: 0c * the number of examples, internal memory: 400M * the number of examples. Resources occupied by the snapshot examples L2 are "400M", namely 400M internal memory, and the required extra cost is storage: 400M * the number of examples, bandwidth: 400M * the number of examples.

As shown, in the case of combining the snapshot ability, a batch of processes (for instance, a plurality of similar application instances of the same application) may be started first, the above internal memory merging sorting operation is executed (e.g., a series of operations shown in **FIG. 7**), and a snapshot operation (1:1 snapshot, that is, one example, one snapshot) is performed on standby surviving examples after internal memory merging by utilizing, for instance, the Checkpoint/Restore technology. Therefore, a snapshot example set in the state L2 is obtained (for instance, generating a snapshot set, and reducing the snapshot size at the level of magnetic disks by simulating KSM). Afterwards, the state L1 may be reached by utilizing a local restore technology and utilizing KSM. Afterwards, millisecond-level restore to the online state L0 is achieved through CPU re-binding.

During first starting, the state L1 may be reached directly by executing the above internal memory merging sorting operation (e.g., a series of operations shown in **FIG. 7**) on a cold-starting process. Afterwards, millisecond-level restore to the online state L0 is achieved through CPU re-binding.

In other words, when a batch of similar application instances are cold-started, the operations as shown in **FIG. 7** may be directly executed on the application instances to convert the cold-started examples occupying the "4G" internal memory to the standby state (i.e., state L1) occupying the "400M" internal memory. Afterwards, a full flow receiving state of the similar application instances may be restored based on an expansion instruction, namely, directly restoring from the state L1 to the online state L0 of "4c4g".

When it is required to restore from the full flow state to the lower power consumption state (i.e., contraction after expansion), internal memory sorting may be performed on the examples in the online state, a plurality of application instances subjected to internal memory merging are made to a snapshot, thereby obtaining the state L2, and starting may be carried out via the snapshots to restore to the full flow receiving state of the plurality of application instances. In other words, internal memory sorting results based on the present disclosure may be secondarily utilized by introducing the snapshot technology, so as to avoid continuous cold-starting of the examples. As cold-starting is longer in time than snapshot starting (e.g., 30 s vs 10 s), the starting time can be shortened by making the snapshots during contraction. Further, as for snapshots made from examples subjected to the internal memory sorting operations of the present disclosure, the internal memory arrangement between the examples are consistent, so the sorting operation based on the base tree may be omitted, KSM internal memory merging is directly performed, and the subsequent contraction and expansion efficiency is improved.

In addition, prior to introducing the snapshot technology, the present disclosure is applied to vertical expansion, that is, contraction and a subsequent expansion operation are performed on a plurality of application instances generated by the same machine. After introducing the snapshot technology, the snapshots may be distributed across machines to achieve horizontal expansion of the plurality of application instances.

The application management method and the corresponding internal memory sorting method according to the present disclosure are described above in combination with **FIG. 1** to **FIG. 9****.** Further, the present disclosure may also be implemented as a corresponding application management apparatus and/or an internal memory sorting apparatus.

**FIG. 10** shows a schematic diagram of composition of an application management apparatus according to an embodiment of the present disclosure.

As shown, the apparatus 1000 includes a base tree generating unit 1010, an internal memory rearrangement unit 1020 and an internal memory merging unit 1030.

The base tree generating unit 1010 is configured to collect objects in an application instance used for serverless computing and generate a base tree according to a reference hierarchical relationship of the objects. The internal memory rearrangement unit 1020 is configured to perform internal memory object rearrangement on similar application instances according to the base tree. The internal memory merging unit 1030 is configured to perform internal memory merging on the rearranged similar application instances. Therefore, the plurality of application instances are made to enter into a low power consumption state.

Further, the apparatus may further include: a starting unit, configured to cold-start the similar application instances; and a garbage recovery unit, configured to perform an in-heap garbage recovery operation on the plurality of application instances and release temporary objects.

Further, the apparatus may further include: an expansion unit, configured to restore a full flow receiving state of the plurality of application instances based on an expansion instruction.

Further, the apparatus may further include: a snapshot making unit, configured to make the plurality of application instances subjected to internal memory merging into a snapshot, where the expansion unit may be configured to start via the snapshot to restore to the full flow receiving state of the plurality of application instances.

Similarly, the present disclosure may also be implemented as an internal memory sorting apparatus, including: a garbage recovery unit, configured to perform a garbage recovery operation on an application instance used for serverless computing; an internal memory rearrangement unit, configured to perform an internal memory object rearrangement operation based on a base tree for the application instance subjected to garbage recovery, where the base tree is generated by collecting objects in the current application instance or similar application instances of the current application instance and according to a reference hierarchical relationship of the objects; and an internal memory merging unit, configured to perform an internal memory merging operation on the application instance subjected to internal memory object rearrangement.

**FIG. 11** shows a schematic structural diagram of a computing device that may be used for implementing the above application management and/or internal memory sorting methods according to an embodiment of the present disclosure.

Referring to **FIG. 11****,** the computing device 1100 includes a memory 1110 and a processor 1120.

The processor 1120 may be a multi-core processor or contain a plurality of processors. In some embodiments, the processor 1120 may contain a general-purpose main processor and one or more special co-processors, such as a graphics processing unit (GPU), and a digital signal processor (DSP). In some embodiments, the processor 1120 may be implemented using a customized circuit, such as an application specific integrated circuit (ASIC) or field programmable gate arrays (FPGA).

The memory 1110 may include various types of storage units, such as a system internal memory, a read-only memory (ROM) and a permanent storage apparatus. The ROM may store static data or instructions required by the processor 1120 or other modules of a computer. The permanent storage apparatus may be a read/write storage apparatus. The permanent storage apparatus may be a non-volatile storage device which cannot lose stored instructions and data even after a computer is powered off. In some implementations, a mass storage apparatus (e.g., a magnetic disk or optical disk, and a flash memory) is adopted as the permanent storage apparatus. In some other implementations, the permanent storage apparatus may be a removable storage device (e.g., a floppy disk and a CD driver). The system internal memory may be a read/write storage device or a volatile read/write storage device, such as a dynamic random access internal memory. The system internal memory may store instructions and data required when some or all processors run. In addition, the memory 1110 may include a combination of any computer-readable storage medium, including various types of semiconductor storage chips (a DRAM, an SRAM, an SDRAM, a flash memory and a programmable read-only memory), and magnetic disks and/or optical disks may also be adopted. In some implementations, the memory 1110 may include a readable and/or writable removable storage device, such as a compact disc (CD), a read-only digital versatile disc (e.g., a DVD-ROM and a double-layer DVD-ROM), a read-only blue-ray disc, an ultra density optical, a flash memory card (e.g., an SD card, a min SD card, a Micro-SD card and the like) and a magnetic floppy disc. The computer-readable storage medium does not contain carrier waves or transient electronic signals transmitted in a wireless or wired manner.

The memory 1110 stores executable codes thereon, and the executable codes, when processed by the processor 1120, may cause the processor 1120 to execute the application management and/or internal memory sorting methods described above.

The millisecond-level application elastic scheme based on multi-process internal memory sharing according to the present disclosure has been described in detail above with reference to the accompanying drawings. In the present disclosure, by designing the whole set of scheme, and by utilizing the JVM CDS technology, an internal memory heap alignment algorithm and thread stack recovery, with the aid of the KSM internal memory merging technology, a plurality of surviving examples of the same application can occupy extremely few system resources, and millisecond-level elastic expansion of the application instances can be achieved with a low resource cost.

Further, the method may be completed in a user state completely, compared to cold-starting, which often requires 10 minute level expansion time, the millisecond-level scheme can greatly reduce the cost, improve the flexibility of a scheduling system, and achieve serverless applications.

When there is no service flow, by means of the technical solution, a plurality of surviving examples of an application can be cached with the low resource cost. With the same resources, ten thousands of applications are deployed in a public cloud resource pool, and when there is no flow, the resources may be greatly saved, and the cost may be lowered; and by utilizing the characteristics of surviving objects, services can be provided at a millisecond level when flow comes, and distribution according to needs is truly achieved.

Further, in the present disclosure, on the basis of achieving internal memory sharing of the plurality of surviving examples by utilizing the internal memory sharing technology, a set of multi-level-cache low-cost millisecond-level elastic scheme may be further constructed in combination with the Checkpoint/Restore snapshot technology, and thus the time and cost for constructing the surviving cache examples are greatly reduced, horizontal expansion is achieved, and scalization becomes possible.

In addition, the method according to the present disclosure may also be implemented as a computer program or computer program product, and the computer program or computer program product includes computer program code instructions used for executing the steps defined in the above method of the present disclosure.

Alternatively, the present disclosure may also be implemented as a non-transitory machine-readable storage medium (or a computer-readable storage medium, or a machine-readable storage medium) on which executable codes (or computer programs, or computer instruction codes) are stored. When executed by a processor of an electronic device (or a computing device, a server, etc.), the executable codes (or computer programs, or computer instruction codes) cause the processor to execute the steps of the above method according to the present disclosure.

Those skilled in the art will also understand that, various exemplary logical blocks, modules, circuits, and algorithm steps described in conjunction with the disclosure herein may be implemented as electronic hardware, computer software, or a combination of both.

The flowcharts and block diagrams in the accompanying drawings illustrate the architectures, functions, and operations of possible implementations of systems and methods according to multiple embodiments of the present disclosure. In this regard, each block in the flowcharts or block diagrams may represent a module, a program segment, or part of a code, and the module, program segment, or part of the code includes one or more executable instructions for implementing specified logical functions. It is also to be noted that, in some implementations used as substitutes, functions annotated in blocks may alternatively occur in a sequence different from that annotated in the accompanying drawings. For instance, two successive blocks may actually be executed in parallel substantially, and sometimes they may also be executed in an inverse order, which depends on involved functions. It should also be noted that, each block in the block diagrams and/or the flowcharts and a combination of the blocks in the block diagrams and/or the flowcharts may be implemented by using a dedicated hardware-based system configured to perform a specified function or operation, or may be implemented by using a combination of dedicated hardware and a computer instruction.

The embodiments of the present disclosure have been described above. The above description is illustrative, rather than exhaustive, and is not limited to the disclosed various embodiments.

## Claims

1. An application management method, comprising:
collecting objects (S110) in an application instance used for serverless computing;
generating a base tree according to a reference hierarchical relationship of the objects;
performing internal memory object rearrangement (S120) on a plurality of application instances started for a same application according to the base tree; and
performing internal memory merging (S130) on same parts of the plurality of rearranged application instances, based on the object order and reference hierarchical relationships in the base tree to enable the plurality of application instances to enter into a low power consumption state.

2. The method according to claim 1, further comprising:
cold-starting the plurality of application instances started for the same application, and
performing an in-heap garbage recovery operation on the plurality of application instances and releasing temporary objects.

3. The method according to claim 2, wherein, collecting the objects in the application instances and generating the base tree according to the reference hierarchical relationship of the objects, comprises:
collecting surviving objects in a heap after releasing the temporary objects, and generating the base tree according to a reference hierarchical relationship of the surviving objects.

4. The method according to claim 3, wherein, collecting the surviving objects in the heap after releasing the temporary objects, and generating the base tree according to the reference hierarchical relationship of the surviving objects, comprises:
collecting top-layer objects surviving in the heap as a first layer of the base tree;
collecting objects that are directly referenced by objects of the first layer as a second layer of the base tree; and
repeating the collecting until obtaining a final layer, wherein objects collected in the final layer form storage objects that are in accordance with the reference hierarchy.

5. The method according to any of claims 1 to 4, wherein,
the base tree comprises addresses and a hierarchical relationship of the objects; and
the base tree comprises object meta data of each class area of each layer, wherein class area includes but not limited to number and sizes of the objects, without containing the addresses of the objects.

6. The method according to any of claims 1 to 5, wherein, the plurality of application instances comprise one application instance in which the objects are collected and the base tree is generated and a plurality of other application instances similar to the application instances for the same application, and
performing internal memory object rearrangement on the plurality of application instances according to the base tree, comprises:
rearranging data in an internal memory corresponding to each application instance in the plurality of application instances according to the base tree; and wherein, performing internal memory merging on the same parts of the plurality of rearranged application instances comprises:
performing internal memory labeling on the plurality of application instances subjected to the internal memory object rearrangement in a designated heap area; and
enabling kernel internal memory sharing to trigger internal memory sharing between the plurality of application instances.

7. The method according to any of claims 1 to 6, further comprising:
performing a class data sharing operation on a meta area of the plurality of application instances to perform internal memory sharing across the instances.

8. The method according to any of claims 1 to 7, further comprising:
performing frame recovery on a thread of the plurality of application instances.

9. The method according to any of claims 1 to 8, further comprising:
adding various application instances of different applications as the plurality of application instances into an application group; and
performing the internal memory object rearrangement and internal memory merging on the plurality of application instances in each group of a plurality of application groups.

10. The method according to any of claims 1 to 9, further comprising:
restoring a full flow receivable state of the plurality of application instances based on an expansion instruction; wherein, the plurality of application instances are application instances used for vertical expansion.

11. The method according to any of claims 1 to 10, further comprising:
making the plurality of application instances subjected to internal memory merging into a snapshot; and
starting via the snapshot to restore to the full flow receivable state of the plurality of application instances; and
distributing the snapshot across machines to achieve horizontal expansion of the plurality of application instances.

12. An application management apparatus, comprising:
a base tree generating unit (1010), configured to collect objects in an application instance used for serverless computing and generate a base tree according to a reference hierarchical relationship of the objects;
an internal memory rearrangement unit (1020), configured to perform internal memory object rearrangement on a plurality of application instances started for the same application according to the base tree; and
an internal memory merging unit (1030), configured to perform internal memory merging on the same parts of the plurality of rearranged application instances based on the object order and reference hierarchical relationship in the base tree to enable the plurality of application instances to enter into a low power consumption state.

13. The apparatus according to claim 12, further comprising:
a starting unit, configured to cold-start the similar application instances; and
a garbage recovery unit, configured to perform an in-heap garbage recovery operation on the plurality of application instances and release temporary objects.

14. The apparatus according to any of claims 12 or 13, further comprising:
an expansion unit, configured to restore a full flow receiving state of the plurality of application instances based on an expansion instruction; and/or:
a snapshot making unit, configured to make the plurality of application instances subjected to internal memory merging into a snapshot, wherein the expansion unit is configured to start via the snapshot to restore to the full flow receiving state of the plurality of application instances.

15. A computing device, comprising:
a processor; and
a memory, storing executable codes thereon, the executable codes, when executed by the processor, causing the processor to execute the method of any one of claims 1 to 11.

## Patentansprüche

1. Anwendungsverwaltungsverfahren, umfassend:
Sammeln von Objekten (S110) in einer Anwendungsinstanz, die für serverloses Rechnen verwendet wird;
Erzeugen eines Basisbaums gemäß einer hierarchischen Referenzbeziehung der Objekte;
Durchführen von interner Speicherobjektneuanordnung (S120) an einer Vielzahl von Anwendungsinstanzen, die für eine gleiche Anwendung gemäß dem Basisbaum gestartet wird; und
Durchführen von internem Speicherzusammenführen (S130) an gleichen Teilen der Vielzahl von neu angeordneten Anwendungsinstanzen basierend auf der Objektreihenfolge und den hierarchischen Referenzbeziehungen in dem Basisbaum, um der Vielzahl von Anwendungsinstanzen zu ermöglichen, in einen Niedrigleistungsverbrauchszustand einzutreten.

2. Verfahren nach Anspruch 1, ferner umfassend:
Kaltstarten der Vielzahl von Anwendungsinstanzen, die für die gleiche Anwendung gestartet wird, und
Durchführen eines Vorgangs der Müllrückgewinnung im Haufen an der Vielzahl von Anwendungsinstanzen und Freigeben von temporären Objekten.

3. Verfahren nach Anspruch 2, wobei das Sammeln der Objekte in den Anwendungsinstanzen und das Erzeugen des Basisbaums gemäß der hierarchischen Referenzbeziehung der Objekte Folgendes umfasst:
Sammeln von überlebenden Objekten in einem Haufen nach dem Freigeben der temporären Objekte und Erzeugen des Basisbaums gemäß einer hierarchischen Referenzbeziehung der überlebenden Objekte.

4. Verfahren nach Anspruch 3, wobei das Sammeln der überlebenden Objekte in dem Haufen nach dem Freigeben der temporären Objekte und das Erzeugen des Basisbaums gemäß der hierarchischen Referenzbeziehung der überlebenden Objekte Folgendes umfasst:
Sammeln von Objekten der oberen Ebene, die in dem Haufen als eine erste Ebene des Basisbaums überleben;
Sammeln von Objekten, die direkt durch Objekte der ersten Ebene als eine zweite Ebene des Basisbaums referenziert werden; und
Wiederholen des Sammelns, bis eine finale Ebene erhalten wird, wobei Objekte, die in der finalen Ebene gesammelt werden, Speicherobjekte bilden, die gemäß der Referenzhierarchie sind.

5. Verfahren nach einem der Ansprüche 1 bis 4, wobei
der Basisbaum Adressen und eine hierarchische Beziehung der Objekte umfasst; und
der Basisbaum Objektmetadaten jedes Klassenbereichs jeder Ebene umfasst, wobei Klassenbereich Anzahl und Größen der Objekte beinhaltet, aber nicht darauf beschränkt ist, ohne die Adressen der Objekte zu enthalten.

6. Verfahren nach einem der Ansprüche 1 bis 5, wobei die Vielzahl von Anwendungsinstanzen eine Anwendungsinstanz, in der die Objekte gesammelt werden und der Basisbaum erzeugt wird, und eine Vielzahl von anderen Anwendungsinstanzen ähnlich den Anwendungsinstanzen für die gleiche Anwendung umfasst, und
das Durchführen von interner Speicherobjektneuanordnung an der Vielzahl von Anwendungsinstanzen gemäß dem Basisbaum Folgendes umfasst:
Neuanordnen von Daten in einem internen Speicher entsprechend jeder Anwendungsinstanz in der Vielzahl von Anwendungsinstanzen gemäß dem Basisbaum; und wobei das Durchführen von internem Speicherzusammenführen an den gleichen Teilen der Vielzahl von neu angeordneten Anwendungsinstanzen Folgendes umfasst:
Durchführen von interner Speicherbeschriftung an der Vielzahl von Anwendungsinstanzen, die der internen Speicherobjektneuanordnung in einem benannten Haufenbereich ausgesetzt ist; und
Aktivieren von internem Kernel-Speicherteilen, um internes Speicherteilen zwischen der Vielzahl von Anwendungsinstanzen auszulösen.

7. Verfahren nach einem der Ansprüche 1 bis 6, ferner umfassend:
Durchführen eines Klassendatenteilvorgangs an einem Metabereich der Vielzahl von Anwendungsinstanzen, um internes Speicherteilen über die Instanzen hinweg durchzuführen.

8. Verfahren nach einem der Ansprüche 1 bis 7, ferner umfassend:
Durchführen von Rahmenwiederherstellung an einem Thread der Vielzahl von Anwendungsinstanzen.

9. Verfahren nach einem der Ansprüche 1 bis 8, ferner umfassend:
Hinzufügen von verschiedenen Anwendungsinstanzen von verschiedenen Anwendungen als die Vielzahl von Anwendungsinstanzen zu einer Anwendungsgruppe; und
Durchführen der internen Speicherobjektneuanordnung und des internen Speicherzusammenführens an der Vielzahl von Anwendungsinstanzen in jeder Gruppe einer Vielzahl von Anwendungsgruppen.

10. Verfahren nach einem der Ansprüche 1 bis 9, ferner umfassend:
Wiederherstellen eines Vollflussempfangszustands der Vielzahl von Anwendungsinstanzen basierend auf einer Expansionsanweisung; wobei die Vielzahl von Anwendungsinstanzen Anwendungsinstanzen sind, die für vertikale Expansion verwendet werden.

11. Verfahren nach einem der Ansprüche 1 bis 10, ferner umfassend:
Erstellen der Vielzahl von Anwendungsinstanzen, die internem Speicherzusammenführen ausgesetzt ist, zu einem Schnappschuss; und
Starten über den Schnappschuss, den Vollflussempfangszustand der Vielzahl von Anwendungsinstanzen wiederherzustellen; und
Verteilen des Schnappschusses über Maschinen, um horizontale Expansion der Vielzahl von Anwendungsinstanzen zu erreichen.

12. Anwendungsverwaltungsvorrichtung, umfassend:
eine Basisbaumerzeugungseinheit (1010), die dazu konfiguriert ist, Objekte in einer Anwendungsinstanz zu sammeln, die für serverloses Rechnen verwendet wird, und einen Basisbaum gemäß einer hierarchischen Referenzbeziehung der Objekte zu erzeugen;
eine interne Speicherneuanordnungseinheit (1020), die dazu konfiguriert ist, interne Speicherobjektneuanordnung an einer Vielzahl von Anwendungsinstanzen durchzuführen, die für die gleiche Anwendung gemäß dem Basisbaum gestartet wird; und
eine interne Speicherzusammenführungseinheit (1030), die dazu konfiguriert ist, internes Speicherzusammenführen an den gleichen Teilen der Vielzahl von neu angeordneten Anwendungsinstanzen basierend auf der Objektreihenfolge und der hierarchischen Referenzbeziehung in dem Basisbaum durchzuführen, um der Vielzahl von Anwendungsinstanzen zu ermöglichen, in einen Niedrigleistungsverbrauchszustand einzutreten.

13. Vorrichtung nach Anspruch 12, ferner umfassend:
eine Starteinheit, die dazu konfiguriert ist, die ähnlichen Anwendungsinstanzen kalt zu starten; und
eine Müllwiederherstellungseinheit, die dazu konfiguriert ist, einen Vorgang der Müllrückgewinnung im Haufen an der Vielzahl von Anwendungsinstanzen durchzuführen und temporäre Objekte freizugeben.

14. Vorrichtung nach einem der Ansprüche 12 oder 13, ferner umfassend:
eine Expansionseinheit, die dazu konfiguriert ist, einen Vollflussempfangszustand der Vielzahl von Anwendungsinstanzen basierend auf einer Expansionsanweisung wiederherzustellen; und/oder:
eine Schnappschusserstellungseinheit, die dazu konfiguriert ist, die Vielzahl von Anwendungsinstanzen, die internem Speicherzusammenführen ausgesetzt ist, zu einem Schnappschuss zu erstellen, wobei die Expansionseinheit dazu konfiguriert ist, über den Schnappschuss zu starten, den Vollflussempfangszustand der Vielzahl von Anwendungsinstanzen wiederherzustellen.

15. Rechengerät, umfassend:
einen Prozessor; und
einen Speicher, der ausführbare Codes darauf speichert, wobei die ausführbaren Codes, wenn durch den Prozessor ausgeführt, bewirken, dass der Prozessor das Verfahren nach einem der Ansprüche 1 bis 11 ausführt.

## Revendications

1. Procédé de gestion d'application, comprenant :
la collecte d'objets (S110) dans une instance d'application utilisée pour l'informatique sans serveur ;
la génération d'un arbre de base en fonction d'une relation hiérarchique de référence des objets ;
l'exécution d'un réarrangement d'objets en mémoire interne (S120) sur une pluralité d'instances d'application démarrées pour une même application en fonction de l'arbre de base ; et
l'exécution d'une fusion de mémoire interne (S130) sur les mêmes parties de la pluralité d'instances d'application réarrangées, sur la base de l'ordre d'objet et des relations hiérarchiques de référence dans l'arbre de base pour permettre à la pluralité d'instances d'application d'entrer dans un état de basse consommation d'énergie.

2. Procédé selon la revendication 1, comprenant en outre :
le démarrage à froid de la pluralité d'instances d'application démarrées pour la même application, et
l'exécution d'une opération de récupération de ramasse-miettes en tas sur la pluralité d'instances d'application et la libération d'objets temporaires.

3. Procédé selon la revendication 2, dans lequel, la collecte des objets dans les instances d'application et la génération de l'arbre de base en fonction de la relation hiérarchique de référence des objets, comprend :
la collecte d'objets survivants dans un tas après la libération des objets temporaires, et la génération de l'arbre de base en fonction d'une relation hiérarchique de référence des objets survivants.

4. Procédé selon la revendication 3, dans lequel, la collecte des objets survivants dans le tas après la libération des objets temporaires, et la génération de l'arbre de base en fonction de la relation hiérarchique de référence des objets survivants, comprend :
la collecte d'objets de couche supérieure survivant dans le tas en tant que première couche de l'arbre de base ;
la collecte d'objets qui sont directement référencés par des objets de la première couche en tant que deuxième couche de l'arbre de base ; et
la répétition de la collecte jusqu'à l'obtention d'une couche finale, dans lequel les objets collectés dans la couche finale forment des objets de stockage qui sont conformes à la hiérarchie de référence.

5. Procédé selon l'une quelconque des revendications 1 à 4, dans lequel,
l'arbre de base comprend des adresses et une relation hiérarchique des objets ; et
l'arbre de base comprend des métadonnées d'objet de chaque zone de classe de chaque couche, dans lequel la zone de classe comprend, mais sans s'y limiter, le nombre et les tailles des objets, sans contenir les adresses des objets.

6. Procédé selon l'une quelconque des revendications 1 à 5, dans lequel la pluralité d'instances d'application comprend une instance d'application dans laquelle les objets sont collectés et l'arbre de base est générée et une pluralité d'autres instances d'application similaires aux instances d'application pour la même application, et
l'exécution d'un réarrangement d'objets en mémoire interne sur la pluralité d'instances d'application en fonction de l'arbre de base, comprend :
le réarrangement des données dans une mémoire interne correspondant à chaque instance d'application dans la pluralité d'instances d'application en fonction de l'arbre de base ; et dans lequel, l'exécution d'une fusion de mémoire interne sur les mêmes parties de la pluralité d'instances d'application réarrangées comprend :
l'exécution d'un étiquetage de mémoire interne sur la pluralité d'instances d'application soumises au réarrangement d'objets en mémoire interne dans une zone de tas désignée ; et
l'activation du partage de mémoire interne de noyau pour déclencher le partage de mémoire interne entre la pluralité d'instances d'application.

7. Procédé selon l'une quelconque des revendications 1 à 6, comprenant en outre :
l'exécution d'une opération de partage de données de classe sur une zone méta de la pluralité d'instances d'application pour effectuer un partage de mémoire interne à travers les instances.

8. Procédé selon l'une quelconque des revendications 1 à 7, comprenant en outre :
l'exécution d'une récupération de trame sur un fil de la pluralité d'instances d'application.

9. Procédé selon l'une quelconque des revendications 1 à 8, comprenant en outre :
l'ajout de diverses instances d'application de différentes applications en tant que pluralité d'instances d'application dans un groupe d'applications ; et
l'exécution du réarrangement d'objets en mémoire interne et de la fusion de mémoire interne sur la pluralité d'instances d'application dans chaque groupe d'une pluralité de groupes d'application.

10. Procédé selon l'une quelconque des revendications 1 à 9, comprenant en outre :
la restauration d'un état de réception de flux complet de la pluralité d'instances d'application sur la base d'une instruction d'expansion ; dans lequel, la pluralité d'instances d'application sont des instances d'application utilisées pour l'expansion verticale.

11. Procédé selon l'une quelconque des revendications 1 à 10, comprenant en outre :
la création d'un instantané de la pluralité d'instances d'application soumises à la fusion de la mémoire interne ; et
le démarrage via l'instantané pour restaurer l'état de réception de flux complet de la pluralité d'instances d'application ; et
la distribution de l'instantané entre les machines pour obtenir une expansion horizontale de la pluralité d'instances d'application.

12. Appareil de gestion d'application comprenant :
une unité de génération d'arbre de base (1010), configurée pour collecter des objets dans une instance d'application utilisée pour l'informatique sans serveur et générer un arbre de base en fonction d'une relation hiérarchique de référence des objets ;
une unité de réarrangement de mémoire interne (1020), configurée pour effectuer un réarrangement d'objets en mémoire interne sur une pluralité d'instances d'application démarrées pour la même application en fonction de l'arbre de base ; et
une unité de fusion de mémoire interne (1030), configurée pour effectuer une fusion de mémoire interne sur les mêmes parties de la pluralité d'instances d'application réarrangées sur la base de l'ordre d'objet et de la relation hiérarchique de référence dans l'arbre de base pour permettre à la pluralité d'instances d'application d'entrer dans un état de basse consommation d'énergie.

13. Appareil selon la revendication 12, comprenant en outre :
une unité de démarrage, configurée pour démarrer à froid les instances d'application similaires ; et
une unité de récupération de ramasse-miettes, configurée pour effectuer une opération de récupération de ramasse-miettes en tas sur la pluralité d'instances d'application et libérer des objets temporaires.

14. Appareil selon l'une quelconque des revendications 12 ou 13, comprenant en outre :
une unité d'expansion, configurée pour restaurer un état de réception de flux complet de la pluralité d'instances d'application sur la base d'une instruction d'expansion ; et/ou :
une unité de création d'instantané, configurée pour créer un instantané de la pluralité d'instances d'application soumises à la fusion de la mémoire interne, dans lequel l'unité d'expansion est configurée pour démarrer à partir de l'instantané pour restaurer l'état de réception de flux complet de la pluralité d'instances d'application.

15. Dispositif informatique comprenant :
un processeur ; et
une mémoire, stockant des codes exécutables sur celle-ci, les codes exécutables, lorsqu'ils sont exécutés par le processeur, amenant le processeur à exécuter le procédé selon l'une quelconque des revendications 1 à 11.
